Europäisches Patentamt

European Patent Office

Office européen des brevets

(19)

(11) Veröffentlichungsnummer : **0 196 418**
**B1**

(12)                    EUROPÄISCHE PATENTSCHRIFT

(45) Veröffentlichungstag der Patentschrift :
11.01.89

(21) Anmeldenummer : 86101243.3

(22) Anmeldetag : 31.01.86

(51) Int. Cl.⁴ : **F 01 L   1/24**, F 16 J   3/04

(54) **Hydraulischer Tassenstössel für Verbrennungsmotoren.**

(30) Priorität : 29.03.85 DE 3511501

(43) Veröffentlichungstag der Anmeldung :
08.10.86 Patentblatt 86/41

(45) Bekanntmachung des Hinweises auf die Patenterteilung : 11.01.89 Patentblatt 89/02

(84) Benannte Vertragsstaaten :
DE FR GB IT

(56) Entgegenhaltungen :
CH--A--   259 209
DE--A-- 3 023 686
GB--A--   562 101
GB--A--   995 453
GB--A-- 2 093 940
US--A-- 2 109 459
US--A-- 2 109 815
US--A-- 3 074 435

(73) Patentinhaber : MOTOMAK Motorenbau, Maschinen-
und Werkzeugfabrik, Konstruktionen GmbH
Ettinger Str. 26
D-8070 Ingolstadt (DE)

(72) Erfinder : Speil, Walter, Dipl.-Ing.
Friedrich-Ebert-Strasse 60b
D-8070 Ingolstadt (DE)

(74) Vertreter : Klug, Horst, Dipl.-Ing. (FH)
c/o INA Wälzlager Schaeffler KG Postfach 12 20
D-8522 Herzogenaurach (DE)

**Beschreibung**

Die Erfindung betrifft einen hydraulischen Tassenstößel für Verbrennungsmotoren mit obenliegender Nockenwelle, bestehend aus einem äußeren hohlzylindrischen, an einem Ende durch einen Boden verschlossenen Gehäuse, in welchem konzentrisch mit radialem Abstand ein vom Boden ausgehendes Führungsrohr angeordnet ist, in welchem längsverschieblich ein Kolben eines hydraulischen Spielausgleichselementes gelagert ist, gegen dessen freie Stirnseite das Ende eines Ventilschaftes anliegt, während gegen den Boden des Gehäuses ein Steuernocken anläuft, wobei in einem Hohlraum innerhalb der zylindrischen Innenoberfläche des Gehäuses ein Faltenbalgelement untergebracht ist, welches zusammen mit den übrigen Stößelbauteilen den nach außen völlig abgeschlossenen, ölgefüllten Innenraum des Tassenstößels begrenzt, und welches einerseits mit der Innenoberfläche des Gehäuses und andererseits mit einem aus dem Führungsrohr herausragenden Ende des Kolbens dichtend verbunden ist.

Bei bekannten derartigen Tassenstößeln ist in der Regel der kreisringförmige Hohlraum zwischen der zylindrischen Innenoberfläche des Gehäuses und der Außenoberfläche des Führungsrohres als ein Ölvorratsraum ausgebildet, der durch eine Bohrung in der Außenwand des Gehäuses mit Öl aus dem Schmiermittelkreislauf des Verbrennungsmotors versorgt wird. Dies zieht einige unerwünschte Konsequenzen nach sich, nämlich daß mit dem ständig neu zugeführten Öl auch Schmutzteilchen und insbesondere Luft in den Stößel gelangen, so wie daß der Stößel beim Stillstand des Motors durch diese Ölzuführbohrung leerlaufen kann, was zur Folge haben kann, daß er beim erneuten Starten des Motors zunächst Luft saugt und damit seine Funktion nicht erfüllen kann.

Um diese Nachteile zu vermeiden, hat man bereits hydraulische Stößel insbesondere für Motoren mit untenliegenden Nockenwellen vorgeschlagen, die ein in sich geschlossenes System mit einer einmaligen Ölfüllung darstellen, wodurch die vorher genannten Nachteile nicht auftreten können. Zu diesem Zweck ist es erforderlich, eine öldichte Begrenzung für den Ölvorratsraum vorzusehen, welche die im Betrieb auftretenden Längenänderungen des Stößels aufnehmen kann (US-A-2 109 815). Bei diesen Längenänderungen treten jedoch gleichzeitig Volumenänderungen im Vorraum auf, die es unter Umständen erforderlich machen, ein zweites nachgiebiges Element vorzusehen, welches diese Volumenänderungen ausgleicht. Zu diesem Zweck hat man bei bekannten Stößeln (CH-A-259 209 und US-A-2 109 459) jeweils in Achsrichtung hintereinander zwei getrennte Faltenbälge vorgesehen, von denen der eine ausschließlich zur Aufnahme der auftretenden Längenänderungen, der andere dagegen ausschließlich zum Ausgleich der Volumenänderungen dient. Diese Konstruktionen bedingen jedoch eine große axiale Länge des hydraulischen Stößels, die nur bei Motoren mit untenliegenden Nockenwellen realisierbar ist.

Der Erfindung liegt die Aufgabe zugrunde, einen hydraulischen Tassenstößel für Verbrennungsmotoren mit obenliegender Nockenwelle zu schaffen, bei dem trotz äußerst begrenzter axialer Baulänge ein in sich abgeschlossenes System verwirklicht wird, welches alle gestellten Forderungen erfüllt.

Nach der Erfindung wird diese Aufgabe dadurch gelöst, daß das Faltenbalg-element zur gleichzeitigen Aufnahme von Längen- und Volumenänderungen aus zwei Faltenbälgen gebildet ist, die an ihren einen Enden miteinander verbunden und in dem kreisringförmigen Hohlraum zwischen der zylindrischen Innenoberfläche des Gehäuses und der Außenoberfläche des Führungsrohrs radial hinter einanderliegend angeordnet sind, wobei zumindest ein Faltenbalg hohlzylindrisch ausgebildet ist.

Ein solches Faltenbalgelement kann beispielsweise aus zwei mit Abstand konzentrisch ineinanderliegenden hohlzylindrischen Faltenbälgen gebildet sein, die an ihren einen Enden mittels eines Radialflansches flüssigkeitsdicht miteinander verbunden sind, während ihre anderen Enden einerseits mit der Innenoberfläche des Gehäuses und andererseits mit einem aus dem Führungsrohr herausragenden Ende des Kolbens dichtend verbunden sind.

Das Faltenbalgelement kann jedoch auch aus einem hohlzylindrischen Faltenbalg gebildet sein, an dessen eines Ende sich ein kreisringförmig radial nach außen gerichteter Faltenbalg mit konzentrisch zueinander verlaufenden Faltenwulsten anschließt.

Diese Faltenbalgelemente können aus unterschiedlichen Werkstoffen bestehen und unterschiedlich aufgebaut sein. So ist es z. B. möglich, diese Faltenbalgelemente einstückig aus polymerem Werkstoff, z. B. aus Kunststoff oder Gummi zu bilden. Das Faltenbalgelement kann andererseits aber auch aus Metall bestehen, wobei es aus Herstellungsgründen zweckmäßig sein kann, das Element aus einzelnen Metallbälgen zu bilden, die durch Löten, Schweißen, insbesondere Hochenergiestrahlschweißen oder andere geeignete Verbindungsverfahren miteinander verbunden sind. Wenn das Faltenbalgelement aus polymerem Werkstoff besteht, kann es zweckmäßig sein, an seinen freien Enden Metallringe anzubringen, insbesondere anzuvulkanisieren, die zur Verbindung mit den angrenzenden Stößelbauteilen dienen.

Dabei kann es zweckmäßig sein, die Metallringe an ihren Sitzflächen zu den angrenzenden Stößelbauteilen mit polymerem Werkstoff zu überziehen, um dadurch eine sichere flüssigkeitsdichte Verbindung zu gewährleisten.

In den Zeichnungen sind Ausführungsbeispiele der Erfindung dargestellt. Es zeigen :

Fig. 1 einen Längsschnitt durch eine Gesamtanordnung eines erfindungsgemäßen Tassenstößels,

Fig. 2 einen Längsschnitt durch einen erfindungsgemäßen Tassenstößel,

Fig. 3 einen Längsschnitt durch eine gegenüber Figur 2 abgewandelte Konstruktion,

Fig. 4 und 5 Längsschnitte durch einzelne Faltenbalgelemente.

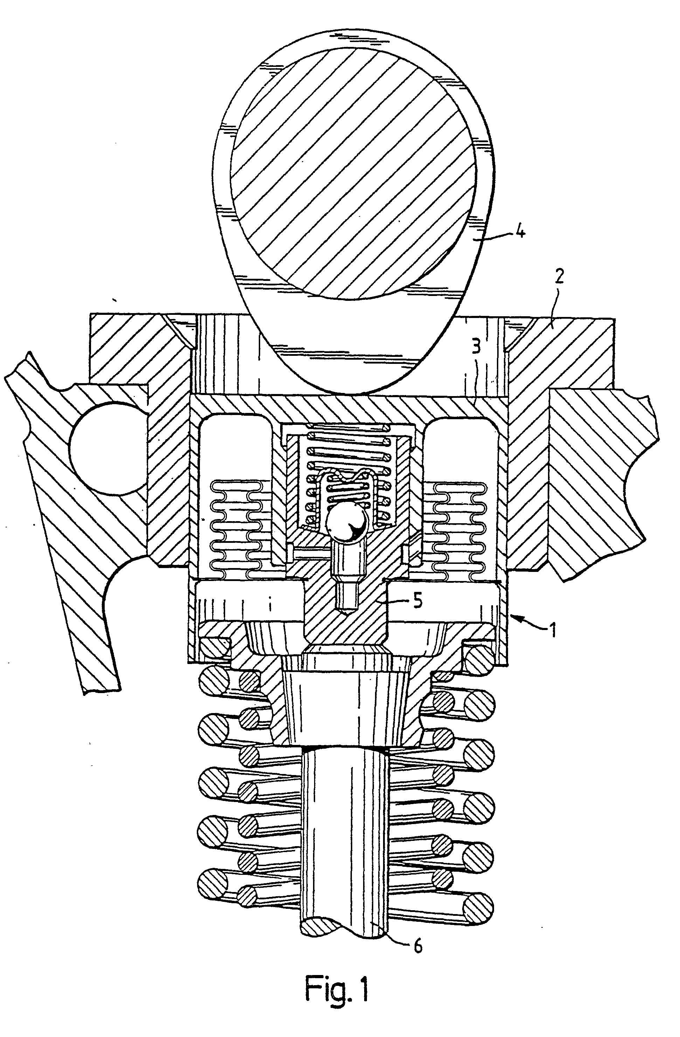

Aus Figur 1 ist die Gesamtanordnung eines erfindungsgemäßen Tassenstößels in einem Ventiltrieb zu erkennen. Der Tassenstößel 1 ist längsverschieblich in einer Führung 2 des Motorblocks gelagert. Gegen seinen geschlossenen Boden 3 läuft der Steuernocken 4 an und sein Kolben 5 wirkt auf den Schaft 6 eines Gaswechselventiles ein.

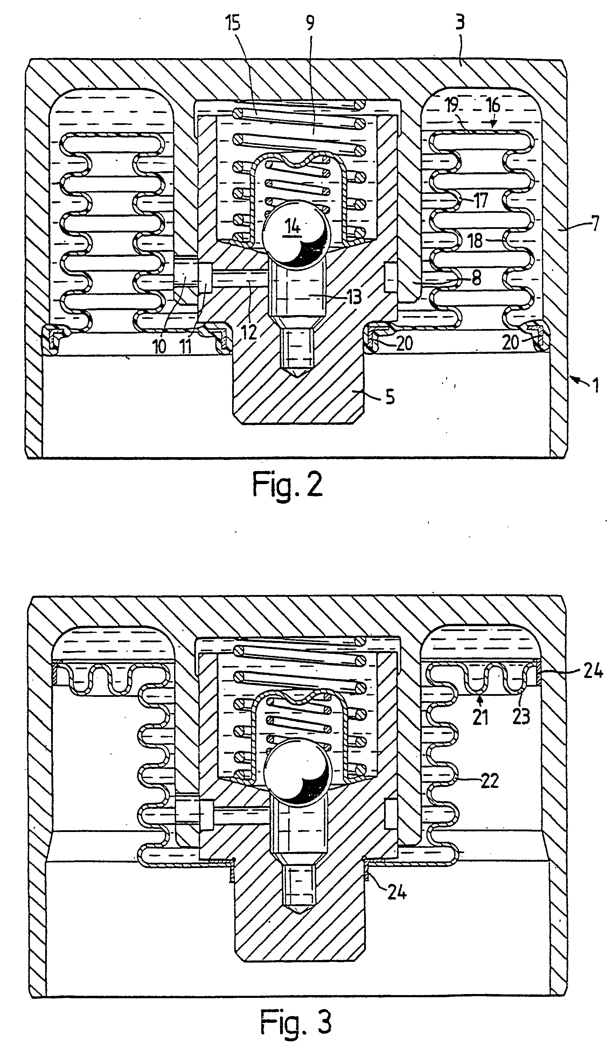

In Figur 2 ist ein Tassenstößel 1 dargestellt, der im wesentlichen dem gemäß Figur 1 entspricht. Er besteht aus dem äußeren hohlzylindrischen Gehäuse 7, welches an seinem oberen Ende durch den Boden 3 abgeschlossen ist. Von diesem Boden 3 geht das zum Gehäuse 7 konzentrische Führungsrohr 8 aus, in welchem gleitend der Kolben 5 gelagert ist, welcher in seinem Inneren den Druckraum 9 begrenzt. Dieser Druckraum wird mit Öl versorgt durch die Bohrung 10 im Führungsrohr 8, von welcher aus das Öl in die Ringnut 11 des Kolbens 5 gelangt und von dort über die Querbohrung 12 in die Längsbohrung 13, die durch ein Kugelrückschlagventil 14 abgeschlossen ist. Im Innern des Druckraumes 9 ist eine Schraubenfeder 15 vorgesehen, die bestrebt ist, den Kolben 5 nach unten aus dem Führungsrohr 8 herauszudrücken.

In dem kreisringförmigen Hohlraum zwischen der zylindrischen Innenoberfläche des Gehäuses 7 und der Außenoberfläche des Führungsrohres 8 ist ein Faltenbalgelement 16 untergebracht, das einerseits mit der Innenoberfläche des Gehäuses 7 und andererseits mit dem aus dem Führungsrohr 8 herausragenden Ende des Kolbens 5 dichtend verbunden ist. Dieses Faltenbalgelement 16 besteht aus zwei mit Abstand konzentrisch ineinanderliegenden hohlzylindrischen Faltenbälgen 17 und 18, die an ihren einen Enden mittels eines Radialflansches 19 miteinander verbunden sind. Im einfachsten Falle, wie er in Figur 2 dargestellt ist, sind die beiden Faltenbälge 17 und 18 zusammen mit dem Radialflansch 19 einstückig hergestellt.

Das in Figur 2 dargestellte Faltenbalgelement 16 besteht aus polymerem Werkstoff. Zur Befestigung seiner Enden an den angrenzenden Stößelbauteilen sind dort Metallwinkelringe 20 vorgesehen, die völlig in dem polymeren Werkstoff eingebettet sind, so daß sie die Enden des Faltenbalgelementes 16 unter Vorspannung druckdicht gegenüber den angrenzenden Stößelbauteilen abdichten können.

In Figur 3 ist eine Variante dargestellt mit einem metallischen Faltenbalgelement 21, welches aus einem hohlzylindrischen Faltenbalg 22 gebildet ist, an dessen oberes Ende sich ein kreisringförmig radial nach außen gerichteter Faltenbalg 23 mit konzentrisch zueinander verlaufenden Faltenwulsten anschließt. Bei dieser Ausführung sind an den Enden des Faltenbalgelementes Metallwinkelringe 24 vorgesehen, die z. B. durch Löten, Schweißen oder dergleichen einerseits am Faltenbalgelement und andererseits an den angrenzenden Stößelbauteilen befestigt sein können.

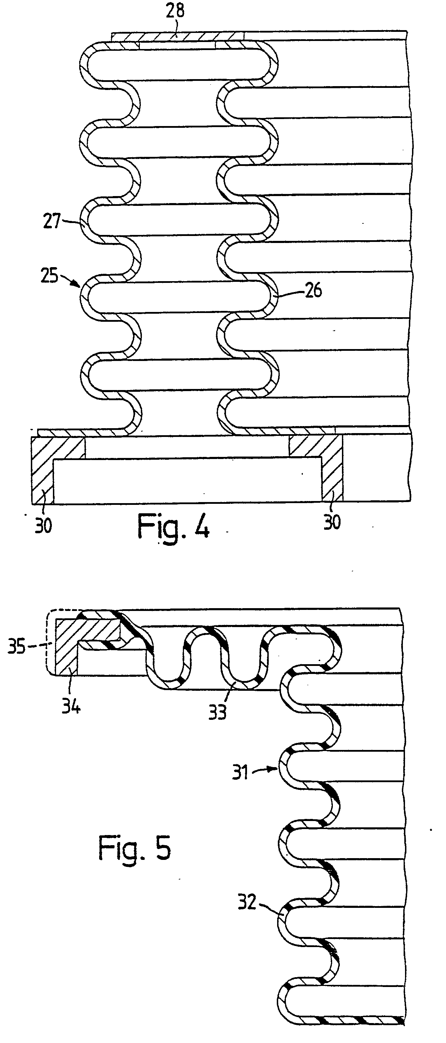

Die Figur 4 zeigt ein Faltenbalgelement 25, welches in seinem grundsätzlichen Aufbau dem nach Figur 2 entspricht. Es besteht aus zwei konzentrischen metallischen Faltenbälgen 26 und 27, die an ihren oberen Enden durch den Ringflansch 28 miteinander verbunden sind. An ihren entgegengesetzten Enden tragen die Faltenbälge 26 und 27 Winkelringe 29 und 30. Die Verbindungen zwischen den Faltenbälgen 26 und 27 einerseits und dem Ringflansch 28 bzw. den Winkelringen 29 und 30 andererseits kann durch jede geeignete Maßnahme, wie z. B. durch Löten, Schweißen, insbesondere Hochenergiestrahlschweißen, Kleben oder jede andere geeignete Verbindungsart erfolgen.

In Figur 5 ist ein Faltenbalgelement 31 aus polymerem Werkstoff dargestellt, welches im wesentlichen dem nach Figur 3 entspricht. Es besteht aus dem hohlzylindrischen Faltenbalg 32, an dessen oberes Ende sich der radiale Faltenbalg 33 anschließt. Dieser ist an seinem radial äußeren Ende mit dem Metallwinkelring 34 verbunden, wobei die Verbindung zwischen dem Winkelring 34 und dem diesen umgreifenden polymerem Werkstoff durch Vulkanisation, aber auch durch Klebung oder dergleichen erfolgen kann. In Abwandlung der dargestellten Ausführung kann der polymere Werkstoff auch die radial äußere Sitzfläche des Winkelringes 34 überziehen, wie es mit der gestrichelten Linie 35 angedeutet ist.

Die Erfindung ist nicht beschränkt auf Stößelausführungen, wie sie in den Figuren 1 bis 3 dargestellt sind, bei welchen nämlich das hydraulische Spielausgleichselement durch einen einzigen in dem Führungsrohr 8 untergebrachten Kolben 5 besteht. Sie ist vielmehr auch anwendbar bei Tassenstößeln, in denen ein aus zwei konzentrisch ineinander geführten Kolben bestehenden Spielausgleichselement angewandt wird, beispielsweise entsprechend DE-OS 30 23 686. In diesem Falle wäre das Faltenbalgelement mit dem aus dem Führungsrohr herausragenden Ende des äußeren Kolbens druckdicht zu verbinden.

**Patentansprüche**

1. Hydraulischer Tassenstößel für Verbrennungsmotoren mit obenliegender Nockenwelle, bestehend aus einem äußeren hohlzylindrischen, an einem Ende durch einen Boden (3) verschlossenen Gehäuse (7), in welchem konzentrisch mit radialem Abstand ein vom Boden ausgehendes Führungsrohr (8) angeordnet ist, in welchem längsverschieblich ein Kolben (5) eines hydraulischen Spielausgleichselements gelagert ist, gegen dessen freie Stirnseite das Ende eines Ventilschaftes (6) anliegt, während gegen den Boden des Gehäuses ein Steuernocken (4) anläuft, wobei in einem Hohlraum innerhalb der zylindrischen Innenoberfläche des Gehäuses (7) ein Faltenbalgelement (16, 21, 25, 31) untergebracht ist, welches zusammen mit den übrigen Stößelbauteilen den nach außen völlig abgeschlossenen, ölgefüllten Innenraum des Tassenstößels begrenzt, und welches einerseits mit der Innenoberfläche des Gehäuses (7) und andererseits mit einem aus dem Führungsrohr (8) herausragenden Ende des Kolbens (5) dichtend verbunden ist, dadurch gekennzeichnet, daß das Faltenbalgelement (16, 21, 25, 31) zur gleichzeitigen Aufnahme von Längen- und Volumenänderungen aus zwei Faltenbälgen (17 und 18, 22 und 23, 26 und 27, 32 und 33) gebildet ist, die an ihren einen Enden miteinander verbunden und in dem kreisringförmigen Hohlraum zwischen der zylindrischen Innenoberfläche des Gehäuses (7) und der Außenoberfläche des Führungsrohrs (8) radial hintereinanderliegend angeordnet sind, wobei zumindest ein Faltenbalg (17, 18, 22, 26, 27, 32) hohlzylindrisch ausgebildet ist.

2. Tassenstößel nach Anspruch 1, dadurch gekennzeichnet, daß das Faltenbalgelement (16, 25) aus zwei mit Abstand konzentrisch ineinanderliegenden hohlzylindrischen Faltenbälgen (17, 18, 26, 27) gebildet ist, die an ihren einen Enden mittels eines Radialflansches (19, 28) flüssigkeitsdicht miteinander verbunden sind.

3. Tassenstößel nach Anspruch 1, dadurch gekennzeichnet, daß das Faltenbalgelement (21, 31) aus einem hohlzylindrischen Faltenbalg (22, 32) gebildet ist, an dessen eines Ende sich ein kreisringförmig radial nach außen gerichteter Faltenbalg (23, 33) mit konzentrisch zueinander verlaufenden Faltenwulsten anschließt.

4. Tassenstößel nach Anspruch 1, 2 oder 3, dadurch gekennzeichnet, daß das Faltenbalgelement (16, 31) einstückig aus polymerem Werkstoff gebildet ist.

5. Tassenstößel nach Anspruch 1, 2 oder 3, dadurch gekennzeichnet, daß das Faltenbalgelement (25) aus einzelnen Metallbälgen (26, 27) gebildet ist, die durch Löten, Schweißen, insbesondere Hochenergiestrahlschweißen miteinander verbunden sind.

6. Tassenstößel nach Anspruch 4 oder 5, dadurch gekennzeichnet, daß an den freien Enden des Faltenbalgelementes (16, 21, 25, 31) Metallringe (20, 24, 29, 34) angebracht, insbesondere anvulkanisiert sind, die zur Verbindung mit den angrenzenden Stößelbauteilen dienen.

7. Tassenstößel nach Anspruch 6, dadurch gekennzeichnet, daß die Metallringe (20, 34) an ihren Sitzflächen zu den angrenzenden Stößelbauteilen mit polymerem Werkstoff überzogen sind (35).

## Claims

1. Hydraulic tappet for internal combustion engines with overhead camshaft, consisting of an outer hollow cylindrical housing (7) closed at one end by a bottom (3), in which there is concentrically arranged with radial spacing a guide tube (8) extending from the bottom, in which there is mounted slidable longitudinally a piston (5) of a hydraulic play-compensating element, against whose free face there bears the end of a valve spindle (6), while a control cam (4) runs against the bottom of the housing, wherein a bellows element (16, 21, 25, 31) is fitted in a hollow space within the cylindrical inner surface of the housing, which delimits together with the other tappet components the oil-filled inner space of the tappet, completely sealed to the outside, and which is sealed tight on the one hand to the inner surface of the housing (7) and on the other hand to an end of the piston (5) projecting out of the guide tube (8), characterized in that the bellows element (16, 21, 25, 31) is formed, for simultaneous accomodation of variations in length and volume, from two bellows (17 and 18, 22 and 23, 26 and 27, 32 and 33) which are connected together at their one ends and are arranged radially in series in the circular hollow space between the cylindrical inner surface of the housing (7) and the outer surface of the guide tube (8), at least one bellows (17, 18, 22, 26, 27, 31) being formed as a hollow cylinder.

2. Tappet according to claim 1, characterized in that the bellows element (16, 25) is formed from two spaced hollow cylindrical bellows (17, 18, 26, 27) lying concentrically within each other, which are connected together at their one ends in fluid tight manner by means of a radial flange (19, 28).

3. Tappet according to claim 1, characterized in that the bellows element (21, 31) is formed from a hollow cylindrical bellows (22, 32), to whose one end is connected a circular bellows (23, 33) directed radially outwards with bellows folds running concentric to one another.

4. Tappet according to claim 1, 2 or 3, characterized in that the bellows element (16, 31) is formed in one piece from polymer material.

5. Tappet according to claim 1, 2 or 3, characterized in that the bellows element (25) is formed from individual metal bellows (26, 27) which are connected together by soldering, welding, especially high energy beam welding.

6. Tappet according to claim 4 or 5, characterized in that metal rings (20, 24, 29, 34) are fitted at the free ends of the bellows element (16, 21, 25, 31), especially vulcanised on, which serve for connection to the adjoining tappet components.

7. Tappet according to claim 6, characterized in that the metal rings (20, 34) are coated with polymer material (35) on their faces seating on the adjoining tappet components.

## Revendications

1. Poussoir hydraulique en cloche pour moteurs à combustion interne à arbre à cames en tête, comprenant un boîtier (7) extérieur cylindrique creux, fermé par un fond (3) à une extrémité, dans lequel est placé concentriquement à distance radiale un tube de guidage (8) partant du fond, dans lequel est placé de façon à pouvoir coulisser longitudinalement un piston (5) d'un élément de rattrapage de jeu hydraulique contre la face frontale libre duquel s'appuie l'extrémité d'une tige de soupape (6), tandis qu'une came de commande (4) vient contacter le fond du boîtier, un élément à soufflets (16, 21, 25, 31) étant logé dans une cavité située à l'intérieur de la surface intérieure cylindrique du boîtier (7), lequel élément délimite, avec les autres composants du poussoir, la cavité intérieure du poussoir remplie d'huile, entièrement fermée vers l'extérieur, et est en liaison étanche d'une part avec la surface intérieure du boîtier (7) et, d'autre part, avec une extrémité du piston (5) sortant du tube de guidage (8), caractérisé en ce que l'élément à soufflets (16, 21, 25, 31) servant à la fois à rattraper des variations de longueur et de volume se compose de deux soufflets (17 et 18, 22 et 23, 26 et 27, 32 et 33) qui sont reliés entre eux par une de leurs extrémités et sont placés dans la cavité circulaire annulaire entre la surface intérieure cylindrique du boîtier (7) et la surface extérieure du tube de guidage (8) radialement l'un après l'autre, au moins un soufflet (17, 18, 22, 26, 27, 32) ayant la forme d'un cylindre creux.

2. Poussoir selon la revendication 1, caractérisé en ce que l'élément à soufflets (16, 25) comprend deux soufflets (17, 18, 26, 27) cylindriques creux situés concentriquement l'un à l'intérieur de l'autre à distance mutuelle, qui sont reliés à une de leurs extrémités de façon étanche au liquide au moyen d'une bride radiale (19, 28).

3. Poussoir selon la revendication 1, caractérisé en ce que l'élément à soufflets (21, 31) comprend un soufflet cylindrique creux (22, 32), à une première extrémité duquel se raccorde un soufflet (23, 33) dirigé radialement vers l'extérieur en formant un anneau circulaire, comportant des renflements de plis concentriques.

4. Poussoir selon la revendication 1, 2 ou 3 caractérisé en ce que l'élément à soufflets (16, 31) est constitué d'un seul tenant par une matière polymère.

5. Poussoir selon la revendication 1, 2 ou 3, caractérisé en ce que l'élément à soufflets (25) est constitué par des soufflets métalliques individuels (26, 27) qui sont reliés entre eux par brasage, soudage, notamment soudage par rayonnement de haute énergie.

6. Poussoir selon la revendication 4 ou 5, caractérisé en ce que des anneaux métalliques (20, 24, 29, 34) sont placés, en particulier fixés par vulcanisation, sur les extrémités libres de l'élément à soufflets (16, 21, 25, 31), et servent à la liaison avec les composants contigus du poussoir.

7. Poussoir selon la revendication 6, caractérisé en ce que les anneaux métalliques (20, 34) sont recouverts de matière polymère (35) sur leurs surfaces d'appui avec les composants contigus du poussoir.

Fig.1

Fig. 2

Fig. 3

2

Fig. 4

Fig. 5